# EUROPEAN PATENT APPLICATION

(11) **EP 4 760 927 A1**
(43) Date of publication of application: **17.06.2026**
(21) Application number: 24850622.2
(22) Date of filing: 16.05.2024
(51) Int. Cl.: H01M 50/258, H01M 50/242, H01M 50/244, H01M 50/249, H01M 50/209

(54) **BATTERY PACK ASSEMBLY FOR VEHICLE**

(30) Priority: 07.08.2023 CN 202310981068
(71) Applicant: SAIC MOTOR Corporation Limited, Shanghai 201203 (CN)
(72) Inventor: LU, Kewei, Shanghai 201804 (CN); GE, Hailong, Shanghai 201804 (CN); LI, Zhao, Shanghai 201804 (CN); LI, Xuemeng, Shanghai 201804 (CN); SUN, Changrui, Shanghai 201804 (CN); CHEN, Qiuyun, Shanghai 201804 (CN); CHEN, Tianhao, Shanghai 201804 (CN)
(74) Representative: Santarelli
(86) International application number: PCT/CN2024/093583
(87) International publication number: WO 2025/030969

(57) **Abstract**

Provided in the present application is a battery pack assembly for a vehicle, the battery pack assembly comprising a bottom tray; at least one battery cell module, which is received on the bottom tray; a battery cell constraint system, which is arranged above the at least one battery cell module, wherein the at least one battery cell module is fixed between the bottom tray and the battery cell constraint system; and a top cover, which is arranged above the battery cell constraint system and configured to be connectable to the bottom tray. The at least one battery cell module comprises a first battery cell group and a second battery cell group, which are adjacent to each other via a side surface portion excluding positive and negative electrode structures and which are axisymmetrically arranged with each other, wherein each battery cell group comprises at least two battery cell pairs and a spacer located between one battery cell pair and the other battery cell pair. Thus, battery cells can be directly integrated into the battery pack assembly by means of only one packaging process, without the need for the battery cells to be assembled into a module by means of a packaging process and for the module to be then subjected to a secondary packaging process to form the battery pack assembly.

## Description

### FIELD

The present application relates to a battery pack assembly. In particular, the present application relates to a battery pack assembly for a vehicle, especially an electric vehicle.

### BACKGROUND

An electric vehicle is a type of new energy vehicle. The electric vehicle is powered by a power battery. The power battery stores energy through a charging process, thereby supplying power for the vehicle's travel and enabling various other functions of the vehicle.

In the related art, multiple battery cells are typically assembled into a battery module via components such as end plates and side plates. Multiple battery modules are further combined into a battery pack assembly. Such battery pack assembly is installed in the vehicle to serve as its power source. However, the batteries assembled in the conventional manner according to the related art still have drawbacks. For example, during assembly of the battery cells into the battery module, the end plates, the side plates, and other components used are generally made of metals and/or alloys. These components are heavy and large in size, leading to unnecessary weight increase and wasted space in the vehicle.

Therefore, in view of the foregoing but not limited thereto, it is desirable to provide a novel battery pack assembly to address at least the above-mentioned issues.

### SUMMARY

An object of the present application is to provide a power battery for a vehicle, which is advantageous over the related art in at least one aspect.

To this end, in one aspect, a battery pack assembly for a vehicle is provided according to the present application. The battery pack assembly includes a base, at least one battery cell module disposed on the base, a battery cell restraint system arranged above the at least one battery cell module, and a top cover arranged above the battery cell restraint system and configured to connect to the base. The at least one battery cell module is fixed between the base and the battery cell restraint system.

Each of the at least one battery cell module includes a first battery cell group and a second battery cell group. The first battery cell group and the second battery cell group are arranged axisymmetrically relative to each other, with lateral surfaces, which are not provided with positive and negative terminals, of the first battery cell group and the second battery cell group arranged adjacent to each other.

Each of the battery cell groups includes at least two battery cell pairs and an isolator. The at least two battery cell pairs are positioned such that lateral surfaces, which are not provided with positive and negative terminals, of each two adjacent battery cell pairs of the at least two battery cell pairs face each other. The isolator is located between each two adjacent battery cell pairs to thermally isolate the two adjacent battery cell pairs from each other.

Each of the battery cell pairs includes a first battery cell, a second battery cell, and an elastic element located between the first battery cell and the second battery cell. The elastic element is configured to space the first battery cell and the second battery cell apart from each other and elastically support the first battery cell and the second battery cell.

Each of the battery cells includes main surfaces and at least one lateral surface. The main surfaces include a top surface and a bottom surface positioned opposite to each other. The main surfaces are arranged parallel to the base, such that the battery cell is horizontally arranged. A positive terminal and a negative terminal of the battery cell are disposed on the at least one lateral surface of the battery cell, and an area of each of the main surfaces is greater than an area of each of the at least one lateral surface.

The battery cell restraint system includes a restraint body configured as a metal sheet that is configured to be laid flat over the battery cell module, and a restraint member formed on the restraint body and configured as a beam-like member. The restraint member is configured to be positioned between each two adjacent battery cell modules to prevent displacement of the two adjacent battery cell modules and/or prevent mutual contact or collision between the two adjacent battery cell modules. The restraint member is configured to be fixed to a stopper of the base, so as to provide a low-rigidity restraint, thereby reducing resistance to expansion of the battery cells during use, increasing the number of cycles of the battery cells, and further prolonging the service life of the battery pack assembly.

In this way, the battery cells can be directly integrated into the battery pack assembly through a single packaging process, without requiring the battery cells to be assembled into modules through a primary packaging process and the modules subsequently formed into the battery pack assembly through a secondary packaging process.

In a possible exemplary embodiment, the base includes the stopper, and the stopper is configured as a sheet-like structure.

In a possible exemplary embodiment, each battery cell module further includes a thermal management system disposed between the first battery cell group and the second battery cell group.

In a possible exemplary embodiment, the thermal management system is connected to the first battery cell group and the second battery cell group by thermally conductive adhesive.

In a possible exemplary embodiment, the thermal management system is configured as a water cooling plate arranged in close contact with the battery cells.

In a possible exemplary embodiment, each battery cell module further includes an integrated end plate. The integrated end plate includes a base plate and a high-voltage connector integrated on the base plate. The high-voltage connector is configured to electrically connect the battery cell module to an external element.

In a possible exemplary embodiment, the integrated end plate is configured to connect to a lateral surface, which is not provided with the positive and negative terminals, of a battery cell located at an end part of the battery cell module by adhesive bonding.

In a possible exemplary embodiment, the battery pack assembly for the vehicle further includes an electrical connection system configured to connect to the battery cell groups. The electrical connection system is configured to allow high-voltage connection for power transmission and allow low-voltage sampling for battery management.

In a possible exemplary embodiment, the electrical connection system is connected to a battery management unit that is separately integrated outside the battery cell module.

In another aspect, a vehicle is further provided according to the present application, which includes the battery pack assembly for the vehicle as described above. The battery pack assembly is electrically connected to a drive axle of the vehicle to power the vehicle.

In yet another aspect, a method for manufacturing the battery pack assembly for the vehicle as described above is further provided according to the present application.

In still another aspect, a method of using the battery pack assembly for the vehicle as described above in a vehicle is further provided according to the present application.

From the foregoing description, it can be understood that the battery pack assembly according to the present application is formed from the battery cells 1 through a single packaging process. In contrast, a battery pack assembly in the related art is formed from battery cells through two packaging processes, i.e., the battery cells are first packaged into modules, and then the modules are further packaged to form the battery pack assembly. The configuration of the battery pack assembly according to the present application significantly reduces the number of components used in the battery pack assembly and decreases the size and weight of the battery pack assembly, thereby improving spatial efficiency of the battery pack assembly and reducing economic costs.

Moreover, the battery cells in the battery pack assembly according to the present application are restrained by a component of low rigidity, thereby reducing resistance to expansion of the battery cells during use, effectively increasing the number of cycles of the battery cells, and further prolonging the service life of the battery pack assembly.

Moreover, the thermal management system is arranged between the first battery cell group and the second battery cell group, preventing propagation of thermal runaway. In the presence of a water cooling plate, the water cooling plate is arranged in close contact with the battery cells, thereby better ensuring the temperature of the battery cells to remain within a suitable range, which can further extend the service life of the battery cells and the battery pack assembly.

### BRIEF DESCRIPTION OF THE DRAWINGS

FIG. 1 shows a battery cell according to an exemplary embodiment of the present application.
FIG. 2 shows a battery cell pair according to an exemplary embodiment of the present application.
FIG. 3 shows a battery cell group according to an exemplary embodiment of the present application.
FIG. 4 shows a battery cell module according to an exemplary embodiment of the present application.
FIG. 5 shows a battery pack assembly according to an exemplary embodiment of the present application.

### DETAILED DESCRIPTION OF THE EMBODIMENTS

Some possible exemplary embodiments of the present application are described below with reference to the accompanying drawings. It should be noted that the drawings are not drawn to scale. Some details may be exaggerated for clarity, and some details unnecessary to be shown are omitted.

The present application relates to a battery pack assembly for a vehicle. The present application further relates to a vehicle including the battery pack assembly. The present application further relates to a method for manufacturing the battery pack assembly for the vehicle as described herein. The method can be integrated into a computer program and/or an electronic storage unit and/or a computer-readable/storage medium. The present application further relates to a method for using the battery pack assembly for the vehicle as described above in a vehicle.

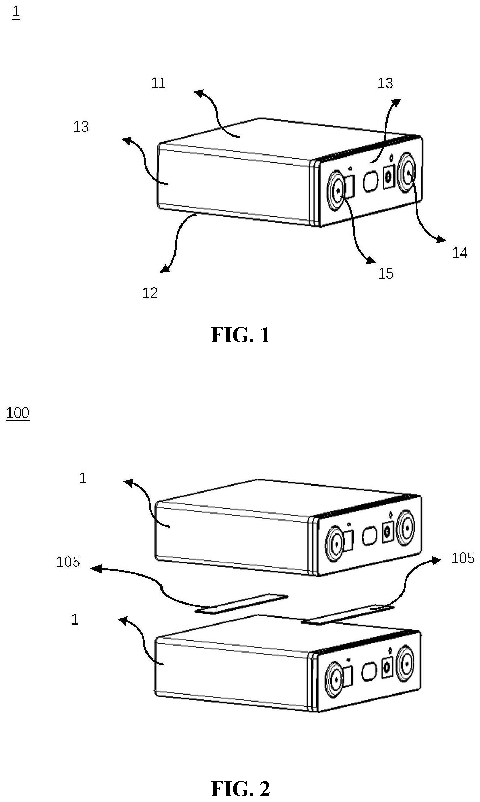

With reference to FIGS. 1 to 5, a battery pack assembly 600 for a vehicle is disclosed according to the present application. The battery pack assembly 600 includes a base (202), at least one battery cell module 500, a battery cell restraint system 300, and a top cover 201. The at least one battery cell module 500 is received on the base 202. The battery cell restraint system 300 is arranged above the at least one battery cell module 500. The at least one battery cell module 500 is fixed between the base 202 and the battery cell restraint system 300. The top cover 201 is arranged above the battery cell restraint system 300, and is configured to connect to the base 202.

The battery pack assembly 600 is configured such that each of the at least one battery cell module 500 includes a first battery cell group and a second battery cell group, which are arranged axisymmetrically relative to each other, with lateral surfaces, which are not provided with positive and negative terminals, of the first battery cell group and the second battery cell group arranged adjacent to each other. Each of the battery cell groups includes at least two battery cell pairs 100 positioned such that lateral surfaces, which are not provided with the positive and negative terminals, of each two adjacent battery cell pairs 100 of the at least two battery cell pairs 100 face each other, and an isolator 106 located between each two adjacent battery cell pairs 100 to thermally isolate the two adjacent battery cell pairs 100 from each other. Each of the battery cell pairs 100 includes a first battery cell, a second battery cell, and an elastic element 105 located between the first battery cell and the second battery cell. The elastic element 105 is configured to space the first battery cell and the second battery cell apart from each other and elastically support the first battery cell and the second battery cell.

Each of the battery cells 1 includes main surfaces. The main surfaces include a top surface 11 and a bottom surface 12 positioned opposite to each other, and the main surfaces are arranged parallel to the base 202, allowing the battery cell to be horizontally arranged. Each of the battery cells further includes at least one lateral surface 13. The positive terminal 14 and the negative terminal 15 of the battery cell 1 are disposed on the at least one lateral surface 13 of the battery cell 1. An area of each of the main surfaces is greater than an area of each of the at least one lateral surface 13.

The battery cell restraint system 300 includes a restraint body 3001 and a restraint member 3002 that is formed on the restraint body 3001 and is configured as a beam-like member. The restraint body 3001 is configured as a sheet-like metal member that is configured to be laid flat over the battery cell module 500. The restraint member 3002 is configured to be positioned between each two adjacent battery cell modules 500, so as to prevent displacement of the two adjacent battery cell modules 500 and/or mutual contact or even collision therebetween. The restraint member 3002 is configured to be fixed to a stopper 2022 of the base 202, so as to provide a low-rigidity restraint, thereby reducing resistance to expansion of the battery cells during use, increasing the number of cycles of the battery cells, and further prolonging service life of the battery pack assembly. As such, the battery cells can be directly integrated into the battery pack assembly 600 through a single packaging process, without requiring the battery cells to be assembled into modules through a primary packaging process and the modules subsequently formed into the battery pack assembly 600 through a secondary packaging process.

As shown in FIG. 1, a battery cell 1 according to an exemplary embodiment of the present application is illustrated. The battery cell 1 has main surfaces. The main surfaces include a top surface 11 and a bottom surface 12, which are opposite to each other. The battery cell 1 further includes at least one lateral surface 13 connecting the top surface 11 and the bottom surface 12. An area of the top surface 11 is greater than an area of each of the at least one lateral surface 13. An area of the bottom surface 12 is greater than the area of each of the at least one lateral surface 13.

FIG. 1 shows a case where each of the top surface 11, the bottom surface 12, and each of the at least one lateral surface 13 is rectangular. It can be appreciated that the top surface 11, the bottom surface 12, and/or each of the at least one lateral surface 13 may be configured in any suitable shape. FIG. 1 shows a case where the at least one lateral surface includes four lateral surfaces. It can be appreciated that the lateral surface 13 may be provided in any suitable number. FIG. 1 shows a case where the area of the top surface 11 is substantially equal to the area of the bottom surface 12 (e.g., the area of the top surface 11 is equal to the area of the bottom surface 12). It can be appreciated that the area of the top surface 11 may be configured differently from the area of the bottom surface 12.

The positive terminal 14 and the negative terminal 15 of the battery cell 1 are disposed on the at least one lateral surface 13 of the battery cell 1. In a case where the battery cell 1 has at least two lateral surfaces, the positive terminal 14 and the negative terminal 15 are disposed on the same one of the at least two lateral surfaces.

FIG. 2 shows a battery cell pair 100 according to an exemplary embodiment of the present application. The battery cell pair 100 includes two battery cells 1, namely a first battery cell and a second battery cell. The two battery cells are stacked one above the other with the main surfaces of the two battery cells arranged adjacent to each other. In other words, a bottom surface of the first battery cell faces a top surface of the second battery cell. The battery cell pair 100 further includes an elastic element 105. The elastic element 105 is disposed between the first battery cell and the second battery cell to space the first battery cell and the second battery cell apart from each other and elastically support the first battery cell and the second battery cell. The elastic element 105 is configured to absorb deformation of at least one of the two battery cells (e.g., deformation caused by charging and/or discharging).

FIG. 2 shows a case where the number of the elastic element 105 is two. It can be appreciated that the elastic element may be provided in any suitable number. FIG. 2 shows a case where the elastic element is configured as an elongated strip. It can be appreciated that the elastic element may be configured in any suitable shape. FIG. 2 shows a case where the elastic elements are parallel to each other. It can be appreciated that the elastic elements may be arranged in any suitable manner, including but not limited to a mutually perpendicular arrangement.

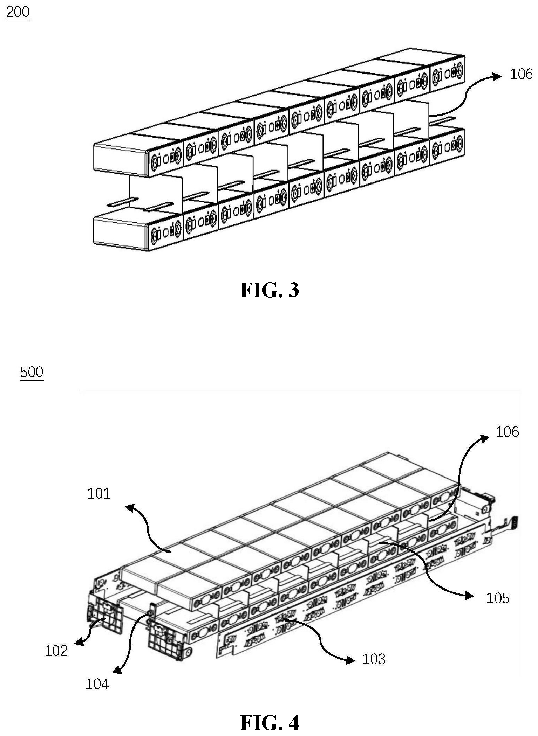

FIG. 3 shows a battery cell group 200 according to an exemplary embodiment of the present application. The battery cell group 200 includes at least two battery cell pairs 100. The at least two battery cell pairs 100 are positioned such that parts, which are not provided with the positive and negative terminals, of lateral surfaces of each two adjacent battery cell pairs 100 of the at least two battery cell pairs 100 face each other. For example, as shown in FIG. 3, the at least two battery cell pairs 100 are positioned such that the lateral surface, which is not provided with the positive and negative terminals, of one of the adjacent battery cell pairs 100 faces the lateral surface, which is not provided with the positive and negative terminals, of the other of the adjacent battery cell pairs 100. The battery cell group further includes at least one isolator 106. Each isolator 106 is arranged between two corresponding adjacent battery cell pairs to thermally isolate the two adjacent battery cell pairs 100 from each other. In this way, in the event of thermal runaway, the propagation of thermal runaway can be effectively retarded or even prevented.

The isolator 106 may be configured in any suitable shape. For example, FIG. 4 shows a case where the isolator 106 is configured as a separation plate. The shape of the isolator 106 may be adapted to the lateral surface of the battery cell pair 100. For example, the shape of the isolator 106 is the same as that of the lateral surface of the battery cell pair 100. The material of the isolator 106 may be or include any fire-resistant and/or heat-resistant material.

FIG. 4 shows a battery cell module 500 according to an exemplary embodiment of the present application. The battery cell module 500 includes two battery cell groups 200, namely a first battery cell group 200 and a second battery cell group 200. The first battery cell group 200 and the second battery cell group 200 are arranged axisymmetrically relative to each other, with lateral surfaces, which are not provided with the positive and negative terminals, of the first battery cell group 200 and the second battery cell group 200 arranged adjacent to each other.

The battery cell module 500 further includes a thermal management system 104. The thermal management system 104 is arranged between the two battery cell groups 200. The thermal management system 104 may be connected to the two battery cell groups 200 by adhesive bonding (e.g., by thermally conductive adhesive). The thermal management system 104 is configured to monitor and control a temperature of the battery cell module 500, thereby ensuring that the temperature of the battery cell module 500 is maintained within an appropriate range, for example during operation or even during non-operation of the battery cell module 500.

In an example, the thermal management system 104 is implemented or configured as a water cooling plate. The water cooling plate is arranged in close contact with the battery cells, so as to perform effective and efficient thermal management on the battery cells.

The battery cell module 500 further includes an electrical connection system 103. The electrical connection system 103 is connected to the two battery cell groups 200 and is configured to allow high-voltage connection and allow low-voltage sampling. The high-voltage connection is used for power transmission between battery cell modules 500. The low-voltage sampling is used for battery management. Specifically, the electrical connection system 103 is further connected to a battery management unit (not shown). The battery management unit may be separately integrated outside the battery cell module 500. In an example, as shown in FIG. 4, the electrical connection system 103 is configured as an integrated component of a substrate and a circuit. It can be appreciated that the electrical connection system 103 can be configured as any suitable entity. In an example, as shown in FIG. 4, the electrical connection system 103 is disposed on the lateral surface of the battery cell provided with the positive and negative terminals. Such mounting can be achieved by any suitable means, such as by snap-fit, welding, and/or adhesive bonding. The electrical connection system may be provided in any suitable number, such as two as shown in FIG. 4.

The battery cell module 500 further includes an integrated end plate 102. The integrated end plate 102 may include a base plate and a high-voltage connector integrated on the base plate. In this way, the integrated end plate can serve as both an end plate to effectively restrain potential movement of the battery cells and a high-voltage connection port to interconnect the battery cell module 500 with other electrical connection elements. In an example, the integrated end plate 102 is configured to connect (e.g., by adhesive bonding) to a lateral surface, which is not provided with the positive and negative terminals, of a battery cell located at an end part of the battery cell module 500.

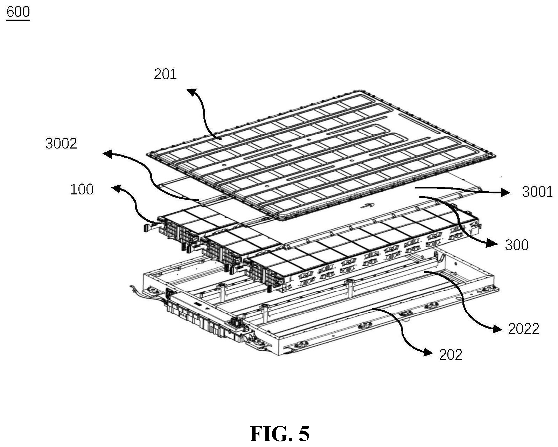

As shown in FIG. 5, a battery pack assembly 600 according to an exemplary embodiment of the present application is illustrated. The battery pack assembly 600 includes at least two battery cell modules 500. For example, the battery pack assembly 600 may include three battery cell modules 500, as shown in FIG. 5. The at least two battery cell modules 500 may be arranged in any suitable manner. The at least two battery cell modules may be arranged side by side in a transverse direction, as shown in FIG. 5. The at least two battery cell modules may alternatively be arranged side by side in a longitudinal direction.

The battery pack assembly 600 includes a base 202. The base 202 may be configured as a tray. The base includes a base part 2021. The base part 2021 is configured to receive the at least two battery cell modules 500 (under the at least two battery cell modules 500). The at least two battery cell modules 500 are positioned such that the main surfaces of the battery cells of the at least two battery cell modules 500 are parallel to the base 202. In this way, each battery cell is arranged in a "lying-down" configuration on the base 202. The base part 2021 may be made of any suitable material. With the above arrangement, the base can isolate the at least two battery cell modules 500 from external environment.

The base includes a stopper 2022. The stopper 2022 is configured to prevent movement of the at least two battery cell modules 500. The stopper 2022 may be configured in any suitable shape. In an example, the stopper 2022 is configured as a post-like member. In another example, the stopper 2022 is configured as a plate-like member. In yet another example, the stopper 2022 is configured as a combination of a post-like member and a plate-like member, as shown in FIG. 5. The stopper 2022 may be made of any suitable material. In an example, the stopper 2022 is made of the same material as that of the base part 2021. In another example, the stopper 2022 may be made of a different material from that of the base part 2021.

The base part 2021 and the stopper 2022 are configured to be manufactured separately and then assembled together. Alternatively, the base part 2021 and the stopper 2022 are configured to be integrally formed.

The battery pack assembly 600 includes a battery cell restraint system 300. The battery cell restraint system 300 is configured to restrain displacement of the at least two battery cell modules 500. The battery cell restraint system 300 is configured to be positioned above the at least two battery cell modules 500. In this way, the battery cell modules 500 can be fixed between the battery cell restraint system 300 and the base 202.

The battery cell restraint system 300 includes a restraint body 3001. The restraint body 3001 may be configured as a sheet-like member. For example, the restraint body 3001 may be configured as a sheet-like member that can be laid flat over the at least two battery cell modules 500, as shown in FIG. 5. It can be appreciated that the restraint body 3001 can be configured in any suitable shape. FIG. 5 shows a case where the restraint body 3001 is made of metal. It can be appreciated that the restraint body 3001 may be made of any suitable material.

The battery cell restraint system 300 includes a restraint member 3002. The restraint member 3002 is formed on the restraint body 3001. The restraint member 3002 is configured to restrain displacement of the at least two battery cell modules 500. The restraint member 3002 may be configured as a beam-like member, as shown in FIG. 5. The restraint member 3002 is configured to be fixed to the stopper 2022 of the base 202. For example, the restraint member 3002 configured as a beam-like member may be configured to be fixed to the stopper 2022 configured as a plate-like member and/or a post-like member (e.g., by threaded connection, snap-fit connection, and/or adhesive bonding).

When the battery cell restraint system 300 is used in cooperation with the at least two battery cell modules 500, the restraint member 3002 is configured to be positioned between each two adjacent battery cell modules 500 to prevent displacement of the two adjacent battery cell modules 500 and/or direct contact or even collision between the two adjacent battery cell modules 500. It can be appreciated that the restraint member 3002 can be configured in any other suitable shape, such as a dot-like protrusion and/or a post-like protrusion. The restraint member 3002 may be made of any suitable material. In an example, the restraint member 3002 is made of the same material as that of the restraint body 3001. In another example, the restraint member 3002 is made of a different material from that of the restraint body 3001.

The restraint body 3001 and the restraint member 3002 are configured to be manufactured separately and then assembled with each other. Alternatively, the restraint body 3001 and the restraint member 3002 are configured to be integrally formed.

The battery pack assembly 600 includes a top cover 201. The top cover 201 is configured to be positioned above the at least two battery cell modules. The top cover 201 is configured to be positioned above the battery cell restraint system 300. The top cover 201 and the base 202 are configured to define an internal space. The at least two battery cell modules 500 (and the battery cell restraint system) are configured to be accommodated in the internal space, such that the at least two battery cell modules 500 are isolated from the external environment. FIG. 5 shows a case where the top cover 201 is fixed to the base 202 by threaded connection. It can be appreciated that the top cover 201 may be fixed to the base 202 by other suitable means, such as welding and/or adhesive bonding.

FIG. 5 shows a case where the top cover 201 is configured as a sheet-like structure. It can be appreciated that the top cover 201 can be formed into any suitable shape or structure. The top cover may be made of any suitable material. In an example, the top cover 201 is made of the same material as that of the base 202. In another example, the top cover 201 may be made of a different material from that of the base 202.

A method for manufacturing the battery pack assembly 600 is further provided according to the present application.

The method includes a first step S101. In the first step S101, at least two battery cells 1 are arranged adjacent to each other to form the battery cell pair 100. The at least two battery cells 1 may be implemented as including and only consisting of two battery cells. Further, an elastic element 105 may be arranged between adjacent ones of the at least two battery cells 1.

The method further includes a second step S102. In the second step S102, at least two battery cell pairs 100 are arranged adjacent to each other to form a battery cell group. Based on practical use, the at least two battery cell pairs 100 may be implemented as two, three, four battery cell pairs, etc. Further, an isolator 106 may be arranged between adjacent ones of the at least two battery cell pairs.

The method further includes a third step S103. In the third S103, at least two battery cell groups are arranged adjacent to each other to form a battery cell module 500. The at least two battery cell groups may be implemented as including and only consisting of two battery cell groups. Further, a thermal management system 104 may be arranged between adjacent ones of the at least two battery cell groups. The thermal management system 104 may be connected to the adjacent ones of the at least two battery cell groups by adhesive bonding. Further, in the third step S103, an electrical connection system 103 may be coupled to the at least two battery cell groups, and/or an integrated end plate 102 may be coupled to the at least two battery cell groups.

The method further includes a fourth step S104. In the fourth step S104, at least one battery cell module 500 is packaged into the battery pack assembly 600. Based on practical use, the at least one battery cell module 500 may be implemented as one, two, three battery cell modules, etc. In this step, the at least one battery cell module 500 is received in a base 202. For example, the at least one battery cell module is configured to be fixed to the base 202 via adhesive bonding. In this step, a battery cell restraint system 300 is connected to the base 202. The battery cell restraint system 300 may be connected to the base 202 via threaded connection. In this step, a top cover 201 is connected to the base 202, so that the top cover 201 and the base 202 define an internal space. The at least one battery cell module 500 is configured to be enclosed in the internal space and isolated from the external environment. The top cover 201 is configured to connect to the base 202 via snap-fit connection.

The present application further relates to a vehicle. The vehicle includes the battery pack assembly as described above. The battery pack assembly is electrically connected to a drive axle of the vehicle to power the vehicle.

The vehicle may be implemented as any suitable vehicle. It can be understood that the vehicle may be implemented as an electric vehicle. It can also be appreciated that the vehicle may be implemented as a hybrid vehicle.

The vehicle may be implemented as a passenger vehicle. Alternatively, the vehicle may be implemented as a commercial vehicle.

The vehicle may be implemented as an autonomous vehicle. Alternatively, the vehicle may be implemented as a vehicle employing assisted driving technology.

As used herein, terms "comprising" and "including" are open-ended and encompass one or more stated features, elements, assemblies, or functions, without excluding the presence or addition of one or more other features, elements, assemblies, functions, or combinations thereof.

Within the scope of the present application, it is expressly intended that the various aspects, embodiments, examples, and alternatives set forth in the foregoing paragraphs, the claims, and/or the following description and drawings, particularly their individual features, may be implemented independently or in any combination. That is, all embodiments and/or features of any embodiment may be implemented in any manner and/or in combination, unless such features are incompatible. The applicant reserves the right to amend any originally filed claims or to file any new claims accordingly, including amending any originally filed claims to depend from any other claim and/or incorporate any feature of any other claim, even if such dependency or incorporation was not originally claimed in that manner.

Although the present application has been described herein with reference to specific embodiments, the scope of the application is not limited to the illustrated details. Various modifications may be made to these details without departing from fundamental principles of the application.

## Claims

1. A battery pack assembly (600) for a vehicle, comprising:
a base (202);
at least one battery cell module (500) disposed on the base (202);
a battery cell restraint system (300) arranged above the at least one battery cell module (500), wherein the at least one battery cell module (500) is fixed between the base (202) and the battery cell restraint system (300); and
a top cover (201) arranged above the battery cell restraint system (300) and configured to connect to the base (202);
wherein each of the at least one battery cell module (500) comprises a first battery cell group and a second battery cell group, and the first battery cell group and the second battery cell group are arranged axisymmetrically relative to each other, with lateral surfaces, which are not provided with positive and negative terminals, of the first battery cell group and the second battery cell group arranged adjacent to each other;
wherein each of the battery cell groups comprises at least two battery cell pairs (100) and an isolator (106), wherein the at least two battery cell pairs (100) are positioned such that lateral surfaces, which are not provided with positive and negative terminals, of each two adjacent battery cell pairs of the at least two battery cell pairs (100) face each other, and the isolator (106) is located between each two adjacent battery cell pairs (100) to thermally isolate the two adjacent battery cell pairs (100) from each other;
wherein each of the battery cell pairs (100) comprises a first battery cell, a second battery cell, and an elastic element (105) located between the first battery cell and the second battery cell, and the elastic element (105) is configured to space the first battery cell and the second battery cell apart from each other and elastically support the first battery cell and the second battery cell;
wherein each of the battery cells comprises:
main surfaces, comprising a top surface (11) and a bottom surface (12) positioned opposite to each other, wherein the main surfaces are arranged parallel to the base (202), such that the battery cell is horizontally arranged; and
at least one lateral surface (13), wherein a positive terminal (14) and a negative terminal (15) of the battery cell (1) are disposed on the at least one lateral surface (13) of the battery cell (1), and an area of each of the main surfaces is greater than an area of each of the at least one lateral surface (13);
wherein the battery cell restraint system (300) comprises:
a restraint body (3001) configured as a metal sheet-like member that is configured to be laid flat over the battery cell module (500); and
a restraint member (3002) formed on the restraint body (3001) and configured as a beam-like member, wherein the restraint member (3002) is configured to be positioned between each two adjacent battery cell modules (500) to prevent displacement of the two adjacent battery cell modules (500) and/or prevent mutual contact or collision between the two adjacent battery cell modules (500), and the restraint member (3002) is configured to be fixed to a stopper (2022) of the base (202), so as to provide a low-rigidity restraint, thereby reducing resistance to expansion of the battery cells during use, increasing the number of cycles of the battery cells, and further prolonging service life of the battery pack assembly;
in this way, the battery cells can be directly integrated into the battery pack assembly (600) through a single packaging process, without requiring the battery cells to be assembled into modules through a primary packaging process and the modules subsequently formed into the battery pack assembly (600) through a secondary packaging process.

2. The battery pack assembly (600) for the vehicle according to claim 1, wherein the base (202) comprises the stopper (2022), and the stopper (2022) is configured as a sheet-like structure.

3. The battery pack assembly (600) for the vehicle according to claim 1 or 2, wherein each of the at least one battery cell module (500) further comprises a thermal management system (104) disposed between the first battery cell group and the second battery cell group.

4. The battery pack assembly (600) for the vehicle according to claim 3, wherein the thermal management system (104) is connected to the first battery cell group and the second battery cell group by thermally conductive adhesive.

5. The battery pack assembly (600) for the vehicle according to claim 3 or 4, wherein the thermal management system (104) is configured as a water cooling plate arranged in close contact with the battery cells.

6. The battery pack assembly (600) for the vehicle according to any one of claims 1 to 5, wherein each of the at least one battery cell module (500) further comprises an integrated end plate (102), the integrated end plate (102) comprises a base plate and a high-voltage connector integrated on the base plate, and the high-voltage connector is configured to electrically connect the battery cell module (500) to an external element.

7. The battery pack assembly (600) for the vehicle according to claim 6, wherein the integrated end plate (102) is configured to connect to a lateral surface, which is not provided with the positive and negative terminals, of a battery cell located at an end part of the battery cell module (500) by adhesive bonding.

8. The battery pack assembly (600) for the vehicle according to any one of claims 1 to 7, further comprising an electrical connection system (103) configured to connect to the battery cell groups, and the electrical connection system (103) is configured to allow high-voltage connection for power transmission and allow low-voltage sampling for battery management.

9. The battery pack assembly (600) for the vehicle according to claim 8, wherein the electrical connection system (103) is connected to a battery management unit that is separately integrated outside the battery cell module (500).

10. A vehicle, comprising the battery pack assembly (600) for the vehicle according to any one of claims 1 to 9, wherein the battery pack assembly (600) is electrically connected to a drive axle of the vehicle to power the vehicle.

11. A method for manufacturing the battery pack assembly for the vehicle according to any one of claims 1 to 9.

12. A method of using the battery pack assembly for the vehicle according to any one of claims 1 to 9 in a vehicle.
